(19) Europäisches Patentamt
European Patent Office
Office européen des brevets

(11) **EP 1 138 480 B1**

(12) **EUROPÄISCHE PATENTSCHRIFT**

(45) Veröffentlichungstag und Bekanntmachung des Hinweises auf die Patenterteilung:
**12.08.2009 Patentblatt 2009/33**

(21) Anmeldenummer: **01106878.0**

(22) Anmeldetag: **20.03.2001**

(51) Int Cl.:
*B32B 27/36* (2006.01)   *B32B 27/20* (2006.01)
*C08J 5/18* (2006.01)

(54) **Siegelfähige biaxial orientierte Polyesterfolie**

Biaxially oriented sealable polyester film

Film de polyester scellable, orienté biaxialement

(84) Benannte Vertragsstaaten:
**DE FR GB IT LU**

(30) Priorität: **29.03.2000 DE 10015633**

(43) Veröffentlichungstag der Anmeldung:
**04.10.2001 Patentblatt 2001/40**

(73) Patentinhaber: **Mitsubishi Polyester Film GmbH**
**65203 Wiesbaden (DE)**

(72) Erfinder:
• **Peiffer, Herbert, Dr.**
**55126 Mainz (DE)**
• **Davis, Richard Lee**
**65187 Wiesbaden (DE)**
• **Hilkert, Gottfried, Dr.**
**55291 Saulheim (DE)**

(74) Vertreter: **Schweitzer, Klaus et al**
**Plate Schweitzer Zounek**
**Patentanwälte**
**Rheingaustrasse 196**
**65203 Wiesbaden (DE)**

(56) Entgegenhaltungen:
EP-A- 0 785 067    EP-A- 1 125 732
WO-A-01/60609    WO-A-01/60611

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine transparente siegelfähige, koextrudierte, biaxial orientierte Polyesterfolie bestehend aus mindestens einer Basisschicht (B) und beidseitig auf dieser Basisschicht aufgebrachten Deckschichten (A) und (C). Die Erfindung betrifft weiterhin ein Verfahren für die Herstellung der Folie und ihre Verwendung.

Siegelfähige, biaxial orientierte Polyesterfolien sind nach dem Stand der Technik bekannt. Diese nach dem Stand der Technik bekannten Folien zeichnen sich entweder durch ein gutes Siegelverhalten oder durch eine gute Optik oder durch ein akzeptables Verarbeitungsverhalten aus.

In der GB-A 1 465 973 wird eine koextrudierte, zweischichtige Polyesterfolie beschrieben, deren eine Schicht aus isophthalsäurehaltigen und terephthalsäurehaltigen Copolyestern und deren andere Schicht aus Polyethylenterephthalat besteht. Über das Siegelverhalten der Folie finden sich in der Schrift keine verwertbaren Angaben. Wegen fehlender Pigmentierung ist die Folie nicht prozesssicher herstellbar (Folie ist nicht wickelbar) und nur unter Einschränkung weiterverarbeitbar.

In der EP-A-0 035 835 wird eine koextrudierte siegelfähige Polyesterfolie beschrieben, der zur Verbesserung des Wickel- und des Verarbeitungsverhaltens in der Siegelschicht Partikel beigesetzt werden, deren mittlere Teilchengröße die Schichtdicke der Siegelschicht übersteigt. Durch die teilchenförmigen Zusatzstoffe werden Oberflächenvorsprünge gebildet, die das unerwünschte Blocken und Kleben der Folie an Walzen oder Führungen verhindern. Über die andere, nicht siegelfähige Schicht der Folie, werden keine näheren Angaben zur Einarbeitung von Antiblockmitteln gemacht. Es bleibt offen, ob diese Schicht Antiblockmittel enthält. Durch Wahl von Partikeln mit größerem Durchmesser als die Siegelschicht und den in den Beispielen angegebenen Konzentrationen wird das Siegelverhalten der Folie verschlechtert. Angaben zum Siegeltemperaturbereich der Folie werden in der Schrift nicht gemacht. Die Siegelnahtfestigkeit wird bei 140 °C gemessen und liegt in einem Bereich von 63 bis 120 N/m (entsprechend 0,97 bis 1,8 N/15 mm Folienbreite).

In der EP-A-0 432 886 wird eine koextrudierte mehrschichtige Polyesterfolie beschrieben, die eine erste Oberfläche besitzt, auf der eine siegelfähige Schicht angeordnet ist, und eine zweite Oberfläche, auf der eine Acrylatschicht angeordnet ist. Die siegelfähige Deckschicht kann auch hier aus isophthalsäurehaltigen und terephthalsäurehaltigen Copolyestern bestehen. Durch die rückseitige Beschichtung erhält die Folie ein verbessertes Verarbeitungsverhalten. Angaben zum Siegelbereich der Folie werden in der Schrift nicht gemacht. Die Siegelnahtfestigkeit wird bei 140 °C gemessen. Für eine 11 μm dicke Siegelschicht wird eine Siegelnahtfestigkeit von 761,5 N/m (entsprechend 11,4 N/15 mm Folienbreite) angegeben. Nachteilig an der rückseitigen Acrylatbeschichtung ist, dass diese Seite gegen die siegelfähige Deckschicht nicht mehr siegelt. Die Folie ist damit nur sehr eingeschränkt zu verwenden.

In der EP-A-0 515 096 wird eine koextrudierte, mehrschichtige, siegelfähige Polyesterfolie beschrieben, die auf der siegelfähigen Schicht ein zusätzliches Additiv enthält. Das Additiv kann z.B. anorganische Partikeln enthalten und wird vorzugsweise in einer wässrigen Schicht an die Folie bei deren Herstellung aufgetragen. Hierdurch soll die Folie die guten Siegeleigenschaften beibehalten und gut zu verarbeiten sein. Die Rückseite der Folie enthält nur sehr wenige Partikeln, die hauptsächlich über das Regranulat in diese Schicht gelangen. Angaben zum Siegeltemperaturbereich der Folie werden auch in dieser Schrift nicht gemacht. Die Siegelnahtfestigkeit wird bei 140 °C gemessen und beträgt mehr als 200 N/m (entsprechend 3 N/15 mm Folienbreite). Für eine 3 μm dicke Siegelschicht wird eine Siegelnahtfestigkeit von 275 N/m (entsprechend 4,125 N/15 mm Folienbreite) angegeben.

In der WO 98/06575 wird eine koextrudierte, mehrschichtige Polyesterfolie beschrieben, die eine siegelfähige Deckschicht und eine nicht siegelfähige Basisschicht enthält. Die Basisschicht kann dabei aus einer oder aus mehreren Schichten aufgebaut sein, wobei eine der Schichten mit der siegelfähigen Schicht in Kontakt ist. Die andere (äußere) Schicht bildet dann die zweite, nicht siegelfähige Deckschicht. Die siegelfähige Deckschicht kann auch hier aus isophthalsäurehaltigen und terephthalsäurehaltigen Copolyestern bestehen, die jedoch keine Antiblockteilchen enthalten. Die Folie enthält außerdem noch mindestens einen UV-Absorber, der der Basisschicht in einer Menge von 0,1 bis 10 Gew.-% zugegeben wird. Die Basisschicht dieser Folie ist mit üblichen Antiblockmitteln ausgestattet. Die Folie zeichnet sich durch eine gute Siegelfähigkeit aus, hat jedoch nicht das gewünschte Verarbeitungsverhalten und weist Defizite in den optischen Eigenschaften (Glanz und Trübung) auf.

Aufgabe der vorliegenden Erfindung war es daher, eine siegelfähige, biaxial orientierte Polyesterfolie bereitzustellen, die die Nachteile der genannten Folien nach dem Stand der Technik nicht aufweist und sich insbesondere durch eine verbesserte Siegelfähigkeit und eine verbesserte Verarbeitbarkeit bei sonst gleichbleibenden oder möglichst noch verbesserten optischen Eigenschaften auszeichnet. Insbesondere war es Aufgabe der vorliegenden Erfindung, den Siegelbereich der Folie auf niedrige Temperaturen zu erweitern und die Siegelnahtfestigkeit der Folie zu verbessern. Außerdem soll dafür Sorge getragen werden, dass die Folie auch auf schnelllaufenden Verarbeitungsmaschinen verarbeitet werden kann. Bei der Herstellung der Folie soll weiterhin gewährleistet sein, dass bei der Folienherstellung anfallendes Verschnittmaterial als Regenerat in einer Menge von bis zu 60 Gew.-%, bezogen auf das Gesamtgewicht der Folie, wieder zu dem Herstellprozess zurückgeführt werden kann, ohne dass dabei die physikalischen und optischen Eigenschaften der Folie nennenswert negativ beeinflusst werden.

Die Aufgabe wird erfindungsgemäß durch die Bereitstellung einer koextrudierten, biaxial orientierten, siegelfähigen Polyesterfolie gemäß Anspruch 1 mit mindestens einer Basisschicht (B), einer siegelfähigen Deckschicht (A) und einer weiteren Deckschicht (C) gelöst, wobei die siegelfähige Deckschicht A eine Siegelanspringtemperatur von maximal 110 °C und eine Siegelnahtfestigkeit von mindestens 1,3 N/15 mm Folienbreite aufweist und die Topographien der beiden Deckschichten (A) und (C) durch die folgenden Merkmale gekennzeichnet sind:

Siegelfähige Deckschicht (A):

$$R_a\text{-Wert} \leq 40\ \text{nm}$$

Messwert der Gasströmung im Bereich von 300 bis 4000 s;

Nicht siegelfähige Deckschicht (C):

$$COF \leq 0{,}5$$

$$40\ \text{nm} \leq R_a \leq 150\ \text{nm}$$

Messwert der Gasströmung $\leq$ 140 s;

Anzahl von Erhebungen $N_C$ pro mm$^2$ Folienoberfläche, die mit der jeweiligen Höhe h über folgende Gleichungen korreliert sind:

$$A_{C1} - B_{C1} \cdot \log h/\mu m < \log N_C/\text{mm}^2 < A_{C2} - B_{C2} \cdot \log h/\mu m$$

$$0{,}01\ \mu m \leq h \leq 10\ \mu m$$

$A_{C1} = 0{,}29\ B_{C1} = 3{,}30$
$A_{C2} = 1{,}84\ B_{C2} = 2{,}70.$

Die Unteransprüche geben bevorzugte Ausführungsformen der Erfindung an, die nachstehend näher erläutert werden.
Erfindungsgemäß ist die Folie zumindest dreischichtig und umfaßt dann als Schichten die Basisschicht (B), die siegelfähige Deckschicht (A) und die nicht siegelfähige Deckschicht (C).

Verwendete Polymere für die Basis und für die Deckschicht:

Basismaterial:

Die Basisschicht (B) der Folie besteht bevorzugt zu mindestens 90 Gew.-% aus einem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroximethyl-cyclohexan und Terephthalsäure (= Poly-1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 Mol-%, bevorzugt mindestens 95 Mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren, wie sie auch in der Schicht (A) oder in der Schicht (C) vorkommen können.
Geeignete andere aliphatische Diole sind beispielsweise Diethylenglykol, Triethylenglykol, aliphatische Glykole der allgemeinen Formel HO-$(CH_2)_n$-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel HO-$C_6H_4$-X-$C_6H_4$-OH, wobei X für -$CH_2$-, -C$(CH_3)_2$-, -C$(CF_3)_2$-, -O-, -S- oder -$SO_2$- steht. Daneben sind auch Bisphenole der Formel HO-$C_6H_4$-$C_6H_4$-OH gut geeignet.

Andere aromatische Dicarbonsäuren sind bevorzugt Benzoldicarbonsäuren, Naphtalindicarbonsäuren, beispielsweise Naphthalin-1,4- oder 1,6-dicarbonsäure, Biphenyl-x,x'-dicarbonsäuren, insbesondere Biphenyl-4,4'-dicarbonsäure, Diphenylacetylen-x,x'-dicarbonsäuren, insbesondere Diphenylacetylen-4,4'-dicarbonsäure, oder Stilben-x,x'-dicarbonsäuren. Von den cycloaliphatischen Dicarbonsäuren sind Cyclohexandicarbonsäuren, insbesondere Cyclohexan-1,4-dicarbonsäure, zu nennen. Von den aliphatischen Dicarbonsäuren sind die ($C_3$ bis $C_{19}$) Alkandisäuren besonders geeignet, wobei der Alkanteil geradkettig oder verzweigt sein kann.

Die Herstellung der Polyester kann z.B. nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Siegelfähige Deckschicht (A):

Die durch Koextrusion auf die Basisschicht (B) aufgebrachte siegelfähige Deckschicht (A) ist auf Basis von Polyestercopolymeren aufgebaut und besteht im wesentlichen aus Copolyestern, die überwiegend aus Isophthalsäure- und Terephthalsäure-Einheiten und aus Ethylenglykol-Einheiten zusammengesetzt sind. Die restlichen Monomereinheiten stammen aus anderen aliphatischen, cycloaliphatischen oder aromatischen Diolen bzw. Dicarbonsäuren, wie sie auch in der Basisschicht vorkommen können. Die bevorzugten Copolyester, die die gewünschten Siegeleigenschaften bereitstellen, sind solche, die aus Ethylenterephthalat- und Ethylenisophthalat-Einheiten und aus Ethylenglykol-Einheiten aufgebaut sind. Der Anteil an Ethylenterephthalat beträgt 40 bis 95 Mol-% und der entsprechende Anteil an Ethylenisophthalat 60 bis 5 Mol-%. Bevorzugt sind Copolyester, bei denen der Anteil an Ethylenterephthalat 50 bis 90 Mol-% und der entsprechende Anteil an Ethylenisophthalat 50 bis 10 Mol-% beträgt, und ganz bevorzugt sind Copolyester, bei denen der Anteil an Ethylenterephthalat 60 bis 85 Mol-% und der entsprechende Anteil an Ethylenisophthalat 40 bis 15 Mol-% beträgt.

Nicht siegelfähige Deckschicht (C):

Für die andere, nicht siegelfähige Deckschicht (C) oder für eventuell vorhandene Zwischenschichten können prinzipiell die gleichen Polymeren verwendet werden, wie sie zuvor für die Basisschicht (B) beschrieben wurden.

Siegel- und Verarbeitungseigenschaften:

Die gewünschten Siegel- und die gewünschten Verarbeitungseigenschaften der erfindungsgemäßen Folie werden aus der Kombination der Eigenschaften des verwendeten Copolyesters für die siegelfähige Deckschicht und den Topographien der siegelfähigen Deckschicht (A) und der nicht siegelfähigen Deckschicht (C) erhalten.

Die Siegelanspringtemperatur von maximal 110 °C und die Siegelnahtfestigkeit von mindestens 1,3 N/15mm Folienbreite wird erreicht, wenn für die siegelfähige Deckschicht (A) die oben näher beschriebene Copolymeren verwendet werden. Die besten Siegeleigenschaften der Folie werden erreicht, wenn dem Copolymeren keine weiteren Additive, insbesondere keine anorganischen oder organischen Füllstoffe, zugegeben werden. Für diesen Fall erhält man bei vorgegebenem Copolyester die niedrigste Siegelanspringtemperatur und die höchsten Siegelnahtfestigkeiten. Allerdings ist in diesem Fall das Handling der Folie schlecht, da die Oberfläche der siegelfähigen Deckschicht (A) stark zum Verblocken neigt. Die Folie lässt sich kaum wickeln und ist für eine Weiterverarbeitung auf schnelllaufenden Verpackungsmaschinen gar nicht geeignet. Zur Verbesserung des Handlings der Folie und der Verarbeitbarkeit ist es notwendig, die siegelfähige Deckschicht (A) zu modifizieren. Dies geschieht am besten mit Hilfe von geeigneten Antiblockmitteln einer ausgewählten Größe, die der Siegelschicht in einer bestimmten Menge zugegeben werden und zwar derart, dass einerseits das Verblocken der Folie minimiert und andererseits die Siegeleigenschaften nur unwesentlich verschlechtert werden. Diese gewünschte Eigenschaftskombination läßt sich überraschend erreichen, wenn die Topographie der siegelfähigen Deckschicht (A) durch den folgenden Satz von Parametern gekennzeichnet ist:

Erfindungsgemäß soll die Rauigkeit der siegelfähigen Deckschicht, ausgedrückt durch den $R_a$-Wert, kleiner/gleich 40 nm sein. Im anderen Fall werden die Siegeleigenschaften im Sinne der vorliegenden Erfindung negativ beeinflusst.

Der Messwert der Gasströmung soll erfindungsgemäß im Bereich von 300 bis 4000 s liegen. Bei Werten unterhalb von 300 s werden die Siegeleigenschaften im Sinne der vorliegenden Erfindung negativ beeinflusst, während sich bei Werten oberhalb von 4000 s das Handling der Folie verschlechtert.

Um das Verarbeitungsverhalten der siegelfähigen Folie weiterhin zu verbessern, sollte die Topographie der nicht siegelfähigen Deckschicht (C) durch den folgenden Satz von Parametern gekennzeichnet sein:

Der Reibungskoeffizient (COF) dieser Seite gegen sich selbst soll erfindungsgemäß kleiner/gleich 0,5 sein. Andernfalls ist das Wickelverhalten und die Weiterverarbeitung der Folie unbefriedigend.

Die Rauigkeit der nicht siegelfähigen Deckschicht (C), ausgedrückt als ihr $R_a$-Wert, soll größer/gleich 40 nm und kleiner/gleich 150 nm sein. Kleinere $R_a$-Werte als 40 nm haben negative Auswirkungen auf das Wickel- und Verarbeitungsverhalten der Folie, während größere $R_a$-Werte als 150 nm die optischen Eigenschaften (Glanz, Trübung) der Folie beeinträchtigen.

Der Messwert der Gasströmung soll für die Deckschicht (C) erfindungsgemäß im Bereich unterhalb von 140 s liegen. Bei Werten oberhalb von 140 s wird das Wickel- und das Verarbeitungsverhalten der Folie negativ beeinflusst.

Die Anzahl der Erhebungen N pro mm$^2$ Folienoberfläche ist mit der jeweiligen Höhe h über die folgende Gleichung korreliert:

$$0,29 - 3,30 \cdot \log h/\mu m < \log N/mm^2 < 1,84 - 2,70 \cdot \log h/\mu m$$

mit

$$0,01\ \mu m \leq h \leq 10\ \mu m$$

Sind die Werte für N kleiner als es der linken Seite der Ungleichung entspricht, so wird das Wickel- und das Verarbeitungsverhalten der Folie negativ beeinflusst, sind die Werte für N größer als es der rechten Seite der Ungleichung entspricht, so werden der Glanz und die Trübung der Folie negativ beeinflusst.

Antiblockmittel

Die Basisschicht (B) kann zusätzlich übliche Additive, wie beispielsweise Stabilisatoren und/oder Antiblockmittel enthalten. Die beiden anderen Schichten (A) und (C) können zusätzlich übliche Additive enthalten, wie beispielsweise Stabilisatoren und/oder Antiblockmittel. Die Mittel werden zweckmäßig dem Polymer bzw. der Polymermischung bereits vor dem Aufschmelzen zugesetzt. Als Stabilisatoren werden vorteilhaft beispielsweise Phosphorverbindungen, wie Phosphorsäure oder Phosphorsäureester, eingesetzt.

Typische Antiblockmittel (in diesem Zusammenhang auch als » Pigmente« bezeichnet) sind anorganische und/oder organische Partikeln, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder vernetzte Polystyrol- oder Acrylat-Partikel.

Als Antiblockmittel können auch Mischungen von zwei oder mehr verschiedenen Antiblockmitteln oder Mischungen von Antiblockmitteln gleicher Zusammensetzung, aber unterschiedlicher Partikelgröße gewählt werden. Die Partikeln können den einzelnen Schichten in den jeweils vorteilhaften Konzentrationen, z.B. als glykolische Dispersion während der Polykondensation oder über Masterbatche bei der Extrusion zugegeben werden.

Bevorzugte Partikel sind $SiO_2$ in kolloidaler und in kettenartiger Form. Diese Partikeln werden sehr gut in die Polymermatrix eingebunden und erzeugen nur geringfügig Vakuolen. Vakuolen verursachen im allgemeinen Trübung und sind daher zweckmäßiger Weise zu vermeiden. Die Partikeldurchmesser der eingesetzten Teilchen sind prinzipiell nicht eingeschränkt. Für die Lösung der Aufgabe hat es sich jedoch als zweckmäßig erwiesen, Teilchen mit einem mittleren Primärpartikeldurchmesser von kleiner als 100 nm, bevorzugt kleiner als 60 nm, besonders bevorzugt kleiner als 50 nm, gemessen nach der Sedigraphmethode, und/oder Teilchen mit einem mittleren Primärpartikeldurchmesser von größer/gleich 1 $\mu$m, bevorzugt größer/gleich 1,5 $\mu$m und besonders bevorzugt größer/gleich 2 $\mu$m zu verwenden. Diese zuletzt beschriebenen Teilchen sollten jedoch keinen mittleren Partikeldurchmesser aufweisen, der größer ist als 5 $\mu$m.

Zur Erzielung der vorgenannten Eigenschaften der siegelfähigen Folie hat es sich als zweckmäßig erwiesen, die Menge an Partikeln in der Basisschicht (B) niedriger einzustellen als in den beiden Deckschichten (A) und (C). Bei einer dreischichtigen Folie vom genannten Typ wird in der Basisschicht (B) die Menge der Partikeln zwischen 0 und 0,15 Gew.-% liegen, vorzugsweise zwischen 0 und 0,12 Gew.-%, insbesondere zwischen 0 und 0,10 Gew.-%. Der Partikeldurchmesser der eingesetzten Teilchen ist prinzipiell nicht eingeschränkt, jedoch sind Teilchen mit einem mittleren Durchmesser von größer/gleich 1 μm besonders bevorzugt.

In der vorteilhaften Verwendungsform besteht die Folie aus drei Schichten, der Basisschicht (B) und beidseitig auf dieser Basisschicht aufgebrachten Deckschichten (A) und (C), wobei die Deckschicht (A) gegen sich selbst und gegen die Deckschicht (C) siegelfähig ist.

Zur Erzielung des genannten Eigenschaftsprofils der Folie weist die Deckschicht (C) mehr Pigmente (d.h. höhere Pigmentkonzentration) auf als die Deckschicht (A). Die Pigmentkonzentration in dieser zweiten Deckschicht (C) liegt erfindungsgemäß zwischen 0,1 und 1,0 Gew.-%, vorteilhaft zwischen 0,12 und 0,8 Gew.-%, insbesondere zwischen 0,15 und 0,6 Gew.-%. Die andere, der Deckschicht (C) gegenüberliegende, siegelfähige Deckschicht (A) enthält dagegen weniger inerte Pigmente. Die Menge an inerten Partikeln in der Schicht (A) liegt nämlich zwischen 0,01 und 0,2 Gew.-%, vorzugsweise zwischen 0,015 und 0,15 Gew.-%, insbesondere zwischen 0,02 und 0,1 Gew.-%, wobei alle Angaben in Gew.-% bezogen sind auf das Gesamtgewicht der jeweiligen Schicht.

Zwischen der Basisschicht und den Deckschichten kann sich gegebenenfalls noch eine Zwischenschicht befinden. Diese kann wiederum aus den für die Basisschichten beschriebenen Polymeren bestehen. In einer besonders bevorzugten Ausführungsform besteht die Zwischenschicht aus dem für die Basisschicht verwendeten Polyester. Die Zwischenschicht kann auch die beschriebenen üblichen Additive enthalten. Die Dicke der Zwischenschicht ist im allgemeinen größer als 0,3 μm und liegt vorzugsweise im Bereich von 0,5 bis 15 μm, insbesondere im Bereich von 1,0 bis 10 μm, besonders bevorzugt im Bereich von 1,0 bis 5 μm.

Bei der besonders vorteilhaften dreischichtigen Ausführungsform der erfindungsgemäßen Folie ist die Dicke der Deckschichten (A) und (C) im allgemeinen größer als 0,1 μm und liegt vorzugsweise im Bereich von 0,2 bis 4,0 μm, besonders bevorzugt im Bereich von 0,2 bis 3,5 μm, insbesondere im Bereich von 0,3 bis 3 μm und ganz besonders bevorzugt im Bereich von 0,3 bis 2,5 μm, wobei die Deckschichten (A) und (C) gleich oder verschieden dick sein können.

Die Gesamtdicke der erfindungsgemäßen Polyesterfolie kann innerhalb bestimmter Grenzen variieren. Sie beträgt 3 bis 80 μm, insbesondere 4 bis 50 μm, vorzugsweise 5 bis 30 μm, wobei die Schicht (B) einen Anteil von vorzugsweise 5 bis 90 % an der Gesamtdicke hat.

Die Polymeren für die Basisschicht (B) und die beiden Deckschichten (A) und (C) werden zur Herstellung der Folie drei Extrudern zugeführt. Etwa vorhandene Fremdkörper oder Verunreinigungen lassen sich aus der Polymerschmelze vor der Extrusion durch geeignete Filter entfernen. Die Schmelzen werden dann in einer Mehrschichtdüse zu flachen Schmelzefilmen ausgeformt und übereinander geschichtet. Anschließend wird der Mehrschichtfilm mit Hilfe einer Kühlwalze und gegebenenfalls weiterer Walzen abgezogen und verfestigt.

Herstellungsverfahren:

Die Erfindung betrifft auch ein Verfahren zur Herstellung der erfindungsgemäßen Polyesterfolie nach dem an sich aus der Literatur bekannten Koextrusionsverfahren.

Im Rahmen dieses Verfahrens wird so vorgegangen, dass die den einzelnen Schichten (A), (B) und (C) der Folie entsprechenden Schmelzen durch eine Flachdüse koextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht noch corona- oder flammbehandelt wird.

Die biaxiale Streckung (Orientierung) wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst wird wie beim Koextrusionsverfahren üblich das Polymere bzw. die Polymermischungen für die einzelnen Schichten in einem Extruder komprimiert und verflüssigt, wobei die gegebenenfalls als Zusätze vorgesehenen Additive bereits im Polymer bzw. in der Polymermischung enthalten sein können. Die Schmelzen werden dann gleichzeitig durch eine Flachdüse (Breitschlitzdüse) gepresst, und die ausgepresste mehrschichtige Schmelze wird auf einer oder mehreren Abzugswalzen abgezogen, wobei die Schmelze abkühlt und sich zu einer Vorfolie verfestigt.

Die biaxiale Streckung wird im allgemeinen sequentiell durchgeführt. Dabei wird die Vorfolie vorzugsweise zuerst in Längsrichtung (d.h. in Maschinenrichtung, = MD-Richtung) und anschließend in Querrichtung (d.h. senkrecht zur Maschinenrichtung, = TD-Richtung) gestreckt. Dies führt zu einer räumlichen Ausrichtung (Orientierung) der Polymerketten. Das Strecken in Längsrichtung läßt sich mit Hilfe zweier entsprechend dem angestrebten Streckverhältnis verschieden schnell rotierender Walzen durchführen. Zum Querstrecken benutzt man allgemein einen entsprechenden Kluppenrahmen, in dem die Folie an beiden Rändern eingespannt und dann bei erhöhter Temperatur nach beiden Seiten gezogen wird.

Die Temperatur, bei der die Streckung durchgeführt wird, kann in einem relativ großen Bereich variieren und richtet sich nach den gewünschten Eigenschaften der Folie. Im allgemeinen wird die Längsstreckung bei einer Temperatur im Bereich von 80 bis 130 °C und die Querstreckung im Bereich von 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1. Vor der Querstreckung kann man eine oder beide Oberfläche (n) der Folie nach den bekannten Verfahren in-line beschichten. Die In-Line-Beschichtung kann beispielsweise zu einer verbesserten Haftung einer Metallschicht oder einer eventuell später aufzubringenden Druckfarbe, aber auch zur Verbesserung des antistatischen Verhaltens oder des Verarbeitungsverhaltens dienen.

Für die Herstellung einer Folie mit sehr guten Siegeleigenschaften hat es sich als günstig erwiesen, wenn die planare Orientierung $\Delta p$ der Folie kleiner ist als $\Delta p = 0,168$, besonders aber kleiner ist als $\Delta p = 0,165$. In diesem Fall ist die Festigkeit der Folie in Dickenrichtung so groß, dass bei der Messung der Siegelnahtfestigkeit definitiv die Siegelnaht aufgetrennt wird und die Folie nicht einreißt und weiterreißt.

Es hat sich herausgestellt, dass die wesentlichen Einflußgrößen auf die planare Orientierung $\Delta p$ die Verfahrensparameter in der Längsstreckung und in der Querstreckung sind, sowie der SV-Wert des verwendeten Rohstoffes. Zu den Verfahrensparametern gehören insbesondere die Streckverhältnisse in Längs- und in Querrichtung ($\lambda_{MD}$ und $\lambda_{TD}$), die Strecktemperaturen in Längs- und in Querrichtung ($T_{MD}$ und $T_{TD}$), die Folienbahngeschwindigkeit und die Art der Streckung, insbesondere diejenige in Längsrichtung der Maschine. Erhält man beispielsweise mit einer Maschine eine planare Orientierung von $\Delta p = 0,169$ mit dem Parametersatz $\lambda_{MD} = 4,8$ und $\lambda_{TD} = 4,0$ , die Strecktemperaturen in Längs- und in Querrichtung $T_{MD} = 80$ bis 118 °C und $T_{TD} = 80$ bis 125 °C, so erhält man durch Erhöhung der Längsstrecktemperatur auf $T_{MD} = 80$ bis 125 °C oder durch Erhöhung der Querstrecktemperatur auf $T_{TD} = 80$ bis 135 °C oder durch Absenkung des Längsstreckverhältnisses auf $\lambda_{MD} = 4,3$ oder durch Absenkung des Querstreckverhältnisses auf $\lambda_{TD} = 3,7$ eine planare Orientierung $\Delta p$, die im gewünschten Bereich liegt. Die Folienbahngeschwindigkeit betrug hierbei 340 m/min und der SV-Wert des Materials etwa 730. Die genannten Daten beziehen sich bei der Längsstreckung auf die sogenannte N-TEP Streckung, die sich zusammensetzt aus einem niedrig orientierenden Streckschritt (LOE = Low Orientation Elongation) und einem hoch orientierenden Streckschritt (REP = Rapid Elongation Process). Bei anderen Streckwerken ergeben sich prinzipiell die gleichen Verhältnisse, jedoch können die Zahlenwerte für die jeweiligen Verfahrensparameter leicht verschieden sein. Die angegeben Temperaturen beziehen sich bei der Längsstreckung auf die jeweiligen Walzentemperaturen und bei der Querstreckung auf die Folientemperaturen, die mittels IR gemessen wurden.

Bei der nachfolgenden Thermofixierung wird die Folie über eine Zeitdauer von etwa 0,1 bis 10 s bei einer Temperatur von 150 bis 250 °C gehalten. Anschließend wird die Folie in üblicher Weise aufgewickelt.

Bevorzugt wird/werden nach der biaxialen Streckung eine oder beide Oberfläche/n der Folie nach einer der bekannten Methoden corona- oder flammbehandelt. Die Behandlungsintensität liegt im allgemeinen im Bereich von über 45 mN/m.

Zur Einstellung weiterer gewünschter Eigenschaften kann die Folie zusätzlich beschichtet werden. Typische Beschichtungen sind haftvermittelnd, antistatisch, schlupfverbessernd oder dehäsiv wirkende Schichten. Es bietet sich an, diese zusätzliche Schichten über In-line-Beschichtung mittels wässriger Dispersionen vor dem Streckschritt in Querrichtung auf die Folie aufzubringen.

Vorteile der Erfindung:

Die erfindungsgemäße Folie zeichnet sich durch eine hervorragende Siegelfähigkeit, ein sehr gutes Handling und durch ein sehr gutes Verarbeitungsverhalten aus. Bei der Folie siegelt die siegelfähige Deckschicht (A) nicht nur gegen sich selbst (fin sealing), sondern auch gegen die selbst nicht siegelfähige Deckschicht (C) (lab sealing). Bei der letztgenannten Variante des lab sealing ist die Siegelanspringtemperatur lediglich um ca. 10 K nach oben verschoben, die Siegelnahtfestigkeit um nicht mehr als 0,3 N/15 mm Folienbreite verringert ist.

Außerdem konnte der Glanz und die Trübung der Folie deutlich verbessert werden. Daneben ist bei der Herstellung der Folie gewährleistet, dass das Verschnittmaterial (Regenerat) in einer Menge im Bereich von 20 bis 60 Gew.-%, bezogen auf das Gesamtgewicht der Folie, wieder der Extrusion zugeführt werden kann, ohne dass dabei die physikalischen Eigenschaften der Folie nennenswert negativ beeinflusst werden, insbesondere ihr optisches Erscheinungsbild.

Die Folie eignet sich demnach ganz hervorragend für den Einsatz in der flexiblen Verpackung und zwar insbesondere dort, wo ihre hervorragenden Siegeleigenschaften und ihre gute Verarbeitbarkeit voll zum Tragen kommt. Dies ist insbesondere ihr Einsatz auf schnelllaufenden Verpackungsmaschinen.

Die nachstehende Tabelle (Tabelle 1) fasst die wichtigsten erfindungsgemäßen Folieneigenschaften noch einmal auf einen Blick zusammen.

**Tabelle 1**

|  | erfindungsgemäßer Bereich | bevorzugt | besonders bevorzugt | Einheit | Messmethode |
|---|---|---|---|---|---|
| **DECKSCHICHT A** | | | | | |
| Siegelanspringtemperatur | < 110 | < 105 | < 100 | °C | intern |
| Siegelnahtfestigkeit | > 1,3 | > 1,5 | > 1,8 | N/15mm | intern |
| Mittlere Rauigkeit $R_a$ | $\leq 40$ | $\leq 30$ | $\leq 20$ | nm | DIN 4768, Cut-off von 0,25 mm |
| Messwertbereich für die Gasströmung | 300-4000 | 500-3500 | 1000-3000 | sec | intern |
| Glanz, 20° | > 120 | > 130 | > 140 | | DIN 67530 |
| **DECKSCHICHT C** | | | | | |
| COF | < 0,5 | < 0,45 | < 0,40 | | DIN 53375 |
| Mittlere Rauigkeit $R_a$ | 40 bis 150 | 45 bis 120 | 50 bis 90 | nm | DIN 4768, Cut-off von 0,25 mm |
| Messwertbereich für die Gasströmung | $\leq 140$ | $\leq 120$ | $\leq 100$ | sec | intern |
| Konstanten $A_1/A_2$ und $B_1/B_2$ | 0,29/3,00 und 1,84/2,7 | | | | |
| Glanz, 20° | > 140 | > 150 | > 160 | | DIN 67530 |
| **weitere Folieneigenschaften** | | | | | |
| Trübung | < 4 | < 3 | < 2,5 | % | ASTM-D 1003-52 |
| Planare Orientierung | < 0,168 | < 0,165 | < 0,163 | | intern |

Zur Charakterisierung der Rohstoffe und der Folien wurden im Rahmen der vorliegenden Erfindung die folgenden Meßmethoden benutzt:

**SV-Wert (standard viscosity)**

Die Standardviskosität SV (DCE) wird, angelehnt an DIN 53726, in Dichloressigsäure gemessen.

Die intrinsische Viskosität (IV) berechnet sich wie folgt aus der Standardviskosität

$$IV\ (DCE) = 6,907 \cdot 10^{-4}\ SV\ (DCE) + 0,063096$$

**Bestimmung der Siegelanspringtemperatur (Mindestsiegeltemperatur)**

Mit dem Siegelgerät HSG/ET der Firma Brugger werden heißgesiegelte Proben (Siegelnaht 20 mm x 100 mm) hergestellt, wobei die Folie bei unterschiedlichen Temperaturen mit Hilfe zweier beheizter Siegelbacken bei einem Siegeldruck von 2 bar und einer Siegeldauer von 0,5 s gesiegelt wird. Aus den gesiegelten Proben wurden Prüfstreifen von 15 mm Breite geschnitten. Die T-Siegelnahtfestigkeit wurde wie bei der Bestimmung der Siegelnahtfestigkeit gemessen. Die Siegelanspringtemperatur ist die Temperatur, bei der eine Siegelnahtfestigkeit von mindestens 0,5 N/15 mm erreicht wird.

**Siegelnahtfestigkeit**

Zur Bestimmung der Siegelnahtfestigkeit wurden zwei 15 mm breite Folienstreifen übereinandergelegt und bei 130 °C, einer Siegelzeit von 0,5 s und einem Siegeldruck von 2 bar (Gerät: Brugger Typ NDS, einseitig beheizte Siegelbacke) versiegelt. Die Siegelnahtfestigkeit wurde nach der T-Peel-Methode bestimmt.

### Reibung

Die Reibung wurde nach DIN 53 375 bestimmt. Die Gleitreibungszahl wurde 14 Tage nach der Produktion gemessen.

### Oberflächenspannung

Die Oberflächenspannung wurde mittels der sogenannten Tintenmethode (DIN 53 364) bestimmt.

### Trübung

Die Trübung nach Hölz wurde in Anlehnung an ASTM-D 1003-52 bestimmt, wobei jedoch zur Ausnutzung des optimalen Meßbereichs an vier übereinanderliegenden Folienlagen gemessen und anstelle einer 4°-Lochblende eine 1°-Spaltblende eingesetzt wurde.

### Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

### Bestimmung der Korngrößen auf Folienoberflächen

Die Bestimmung der Größenverteilung von Erhebungen auf Folienoberflächen erfolgt mit einem Rasterelektronenmikroskop und einem Bildanalysesystem. Verwendet wird das Rasterelektronenmikroskop XL30 CP der Fa. Philips mit einem integrierten Bildanalyseprogramm AnalySIS der Fa. Soft-lmaging System.
Für diese Messungen werden Folienproben flach auf einen Probenhalter aufgebracht. Anschließend werden diese unter einem Winkel a mit einer dünnen Metallschicht (z.B. aus Silber) schräg bedampft. Dabei ist a der Winkel zwischen Probenoberfläche und der Ausbreitungsrichtung des Metalldampfes. Durch diese Schrägbedampfung entsteht hinter der Erhebung ein Schattenwurf. Da die Schatten noch nicht elektrisch leitfähig sind, wird die Probe anschließend noch mit einem zweiten Metall (z.B. Gold) bedampft oder gesputtert, wobei die zweite Beschichtung senkrecht auf die Probenoberfläche auftrifft und somit bei der zweiten Beschichtung keine Schatten entstehen.
Die so präparierten Probenoberflächen werden in einem Rasterelektronenmikroskop (REM) abgebildet. Die Schatten der Erhebungen sind infolge des Materialkontrastes der Metallen sichtbar. Die Probe wird im REM so orientiert, dass die Schatten parallel zu einem Bildrand verlaufen. Für die Bildaufnahme werden folgende Bedingungen am REM eingestellt: Sekundärelektronendetektor, Arbeitsabstand: 10 mm, Beschleunigungsspannung: 10 kV und Spot: 4,5. Die Helligkeit und Kontrast werden so eingestellt, dass sämtliche Bildinformationen als Grauwerte dargestellt werden und die Intensität des Grundrauschens so klein ist, dass es nicht als Schatten detektiert wird. Die Länge der Schatten wird mit dem Bildanalyser ausgemessen. Der Schwellwert für die Schattenerkennung wird auf die Stelle gelegt, wo die 2. Ableitung der Grauwertverteilung des Bildes den Nullpunkt durchquert. Vor der Schattenerkennung wird das Bild mit einem NxN-Filter (Größe 3, 1 Iteration) geglättet. Durch die Setzung eines Rahmens ("frame") wird sichergestellt, dass Erhebungen, die im Bild nicht vollständig abgebildet werden, nicht mitgemessen werden. Die Vergrößerung, die Rahmengröße und die Anzahl der ausgewerteten Bildern werden so gewählt, dass insgesamt 0,36 mm$^2$ Folienoberfläche ausgewertet werden.
Die Höhe der einzelnen Erhebungen wird aus den einzelnen Schattenlängen mit folgender Beziehung errechnet:

$$h = (\tan \alpha) \cdot L$$

wobei h die Höhe der Erhebung, $\alpha$ der Bedampfungswinkel und L die Schattenlänge ist. Die so ermittelten Erhebungen werden in Klassen eingeteilt um zu einer Häufigkeitsverteilung zu kommen. Die Einteilung erfolgt in 0,05 mm breite Klassen zwischen 0 und 1 mm, wobei die kleinste Klasse (0 bis 0,05 mm) für weitere Auswertungen nicht verwendet wird. Die Durchmesser (Ausbreitung senkrecht zur Schattenwurfsrichtung) der Erhebungen werden in ähnlicher Weise in 0,2 mm breiten Klassen von 0 bis 10 mm eingestuft, wobei auch hier die kleinste Klasse für die weitere Auswertung verwendet wird.

**Oberflächengasströmungszeit**

Das Prinzip des Messverfahrens basiert auf der Luftströmung zwischen einer Folienseite und einer glatten Silizium-Wafer-Platte. Die Luft strömt von der Umgebung in einen evakuierten Raum, wobei die Grenzfläche zwischen Folie und Silizium-Wafer-Platte als Strömungswiderstand dient.

Eine runde Folienprobe wird auf einer Silizium-Wafer-Platte, in deren Mitte eine Bohrung die Verbindung zu dem Rezipienten gewährleistet, gelegt. Der Rezipient wird auf einen Druck kleiner 0,1 mbar evakuiert. Bestimmt wird die Zeit in Sekunden, die die Luft benötigt, um in dem Rezeptienten einen Druckanstieg von 56 mbar zu bewirken. Messbedingungen:

| | |
|---|---|
| Messfläche | 45,1 cm$^2$ |
| Anpressgewicht | 1276 g |
| Lufttemperatur | 23 °C |
| Luftfeuchte | 50 % relative Feuchte |
| Gassammelvolumen | 1,2 cm$^3$ |
| Druckintervall | 56 mbar |

**Bestimmung der planaren Orientierung $\Delta$p**

Die Bestimmung der planaren Orientierung erfolgt über die Messung der Brechungsindizes mit dem Abbe-Refraktometer nach der internen Betriebsvorschrift 24.
Probenvorbereitung:

| | |
|---|---|
| Probengröße und Probenlänge: | 60 bis 100 mm |
| Probenbreite: | entspricht Prismenbreite von 10 mm |

Zur Bestimmung von $n_{MD}$ und $n_\alpha$ (=$n_z$) muß die zu messende Probe aus der Folie ausgeschnitten werden, bei der die Laufkante der Probe exakt mit der TD-Richtung übereinstimmen muß. Zur Bestimmung von $n_{TD}$ und $n_\alpha$ (=$n_z$) muß die zu messende Probe aus der Folie ausgeschnitten werden, bei der die Laufkante der Probe exakt mit der MD-Richtung übereinstimmen muß. Die Proben sind aus der Mitte der Folienbahn zu entnehmen. Es ist dafür Sorge zu tragen, dass das Abbe-Refraktometer eine Temperatur von 23 °C hat. Auf das vor der Messung gut gesäuberte untere Prisma wird mit Hilfe eines Glasstabes ein wenig Dijodmethan (N=1,745) bzw. Dijodmethan-Bromnaphthalin-Gemisch aufgetragen. Der Brechungsindex des Gemisches muß größer als 1,685 sein. Darauf wird zuerst die in TD-Richtung ausgeschnittene Probe aufgelegt, so dass die gesamte Prismenoberfläche bedeckt ist. Mit Hilfe eines Papiertaschentuches wird nun die Folie fest auf das Prisma aufgebügelt, so dass die Folie fest und glatt aufliegt. Die überflüssige Flüssigkeit muß abgesaugt werden. Danach wird ein wenig von der Meßflüssigkeit auf die Folie getropft. Das zweite Prisma wird heruntergeklappt und fest angedrückt. Nun wird mit Hilfe der rechten Rändelschraube die Anzeigeskala soweit gedreht, bis im Bereich 1,62 bis 1,68 ein Übergang von hell auf dunkel im Sichtfenster zu sehen ist. Ist der Übergang von hell auf dunkel nicht scharf, werden mit Hilfe der oberen Rändelschraube die Farben so zusammengeführt, dass nur eine helle und eine dunkle Zone sichtbar ist. Die scharfe Übergangslinie wird mit Hilfe der unteren Rändelschraube in den Kreuzungspunkt der beiden (im Okular) diagonalen Linien gebracht. Der nun in der Meßskala angezeigte Wert wird abgelesen und in das Messprotokoll eingetragen. Dies ist der Brechungsindex in Maschinenrichtung $n_{MD}$. Nun wird die Skala mit der unteren Rändelschraube soweit verdreht, dass der im Okular sichtbare Bereich zwischen 1,49 und 1,50 zu sehen ist.

Jetzt wird der Brechungsindex in $n_\alpha$ bzw. $n_z$ (in Dickenrichtung der Folie) ermittelt. Damit der nur schwach sichtbare Übergang besser zu sehen ist, wird auf das Okular eine Polarisationsfolie gelegt. Diese ist solange zu drehen, bis der Übergang deutlich zu sehen ist. Es gilt das gleiche wie bei der Bestimmung von $n_{MD}$. Ist der Übergang von hell auf dunkel nicht scharf (farbig), dann werden mit Hilfe der oberen Rändelschraube die Farben zusammengeführt, so dass ein scharfer Übergang zu sehen ist. Diese scharfe Übergangslinie wird mit Hilfe der unteren Rändelschraube in den Kreuzungspunkt der beiden diagonalen Linien gebracht und den auf der Skala angezeigten Wert abgelesen und in die Tabelle eingetragen.

Anschließend wird die Probe gedreht und die entsprechenden Brechungsindizes $n_{MD}$ und $n_\alpha$ (=$n_z$) der anderen Oberflächenseite gemessen und in eine entsprechende Tabelle eingetragen.

Nach der Bestimmung der Brechungsindizes in MD-Richtung bzw. in Dickenrichtung wird der in MD-Richtung herausgeschnittene Probenstreifen aufgelegt und entsprechend die Brechungsindizes $n_{TD}$ und $n_\alpha$ (= $n_z$) bestimmt. Der Streifen wird umgedreht und die Werte für die B-Seite gemessen. Die Werte für die A-Seite und die B-Seite werden zu mittleren Brechungswerten zusammengefasst. Die Orientierungswerte werden dann aus den Brechungsindizes nach den folgenden Formeln berechnet:

$$\Delta n = n_{MD} - n_{TD}$$

$$\Delta p = (n_{MD} + n_{TD})/2 - n_z$$

$$n_{av} = (n_{MD} + n_{TD} + n_z)/3$$

**Beispiel 1**

Chips aus Polyethylenterephthalat (hergestellt über das Umesterungsverfahren mit Mn als Umesterungskatalysator, Mn-Konzentration: 100 ppm) wurden bei einer Temperatur von 150 °C auf eine Restfeuchte von unterhalb 100 ppm getrocknet und dem Extruder für die Basisschicht (B) zugeführt. Ebenfalls wurden Chips aus Polyethylenterephthalat und einem Füllstoff dem Extruder für die nicht siegelfähige Deckschicht (C) zugeführt.

Daneben wurden Chips aus einem linearen Polyester hergestellt, der aus einem amorphen Copolyester mit 78 Mol.-% Ethylenterephthalat und 22 Mol-% Ethylenisophthalat besteht (hergestellt über das Umesterungsverfahren mit Mn als Umesterungskatalysator, Mn-Konzentration: 100 ppm). DerCopolyesterwurde bei einer Temperatur von 100°C auf eine Restfeuchte von unterhalb 200 ppm getrocknet und dem Extruder für die siegelfähige Deckschicht (A) zugeführt.

Dann wurde durch Koextrusion und anschließende stufenweise Orientierung in Längs- und Querrichtung eine transparente, dreischichtige Folie mit ABC-Aufbau und einer Gesamtdicke von 12 $\mu$m hergestellt. Die Dicke der jeweiligen Deckschichten ist der Tabelle 2 zu entnehmen.

Deckschicht (A), Mischung aus:

97,0 Gew.-%    Copolyester mit einem SV-Wert von 800
3,0 Gew.-%    Masterbatch aus 97,75 Gew.-% Copolyester (SV-Wert von 800) und 1,0 Gew.-% ®Sylobloc 44 H (synthetisches $SiO_2$ der Fa. Grace) und 1,25 Gew.-% ®Aerosil TT 600 (pyrogenes $SiO_2$ der Fa. Degussa)

Basisschicht (B):

100,0 Gew.-%    Polyethylenterephthalat mit einem SV-Wert von 800

Deckschicht (C), Mischung aus:

88 Gew.-%    Polyethylenterephthalat mit einem SV-Wert von 800
12 Gew.-%    Masterbatch aus 97,75 Gew.-% Copolyester (SV-Wert von 800) und 1,0 Gew.-% Sylobloc 44 H (synthetisches $SiO_2$ der Fa. Grace) und 1,25 Gew.-% Aerosil TT 600 (kettenartiges $SiO_2$ der Fa. Degussa)

Die Herstellungsbedingungen in den einzelnen Verfahrensschritten waren:

| | | | | |
|---|---|---|---|---|
| Extrusion: | Temperaturen | A-Schicht: | 3e+08 | °C |
| | | B-Schicht: | | °C |
| | | C-Schicht: | | °C |
| | Düsenspaltweite: | | 2,5 | mm |
| | Temperatur der Abzugswalze | | 30 | °C |
| Längsstreckung: | Temperatur: | | 80-125 | °C |
| | Längsstreckverhältnis: | | 4,2 | |

(fortgesetzt)

| Querstreckung: | Temperatur: | 80-135 | °C |
|---|---|---|---|
| | Querstreckverhältnis | 4 | |
| Fixierung: | Temperatur: | 230 | °C |
| | Dauer: | 3 | s |

Die Folie hatte die geforderten guten Siegeleigenschaften und zeigt das gewünschte Handling und das gewünschte Verarbeitungsverhalten. Der Folienaufbau und die erzielten Eigenschaften derart hergestellter Folien sind in den Tabellen 2 und 3 dargestellt.

**Beispiel 2**

Im Vergleich zu Beispiel 1 wurde die Deckschichtdicke der siegelfähigen Schicht (A) von 1,5 auf 2,0 $\mu$m bei sonst identischem Folienaufbau und identischer Herstellungsweise angehoben. Die Siegeleigenschaften haben sich hierdurch verbessert, insbesondere ist die Siegelnahtfestigkeit deutlich größer geworden.

**Beispiel 3**

Im Vergleich zu Beispiel 1 wurde jetzt eine 20 $\mu$m dicke Folie produziert. Die Deckschichtdicke der siegelfähigen Schicht (A) betrug 2,5 $\mu$m und diejenige der nicht siegelfähigen Schicht (C) betrug 2,0 $\mu$m. Die Siegeleigenschaften haben sich hierdurch nochmals verbessert, insbesondere ist die Siegelnahtfestigkeit deutlich größer geworden. Das Handling der Folie hat sich dabei tendiell auch noch verbessert.

**Beispiel 4**

Im Vergleich zu Beispiel 3 wurde das Copolymere für die siegelfähige Deckschicht (A) geändert. Anstelle des amorphen Copolyesters mit 78 Mol-% Polyethylenterephthalat und 22 Mol-% Ethylenisophthalat wurde jetzt ein amorpher Copolyester mit 70 Mol-% Polyethylenterephthalat und 30 Mol-% Ethylenisophthalat verwendet. Der Rohstoff wurde auf einem Zweischneckenextruder mit Entgasung verarbeitet, ohne dass er vorgetrocknet werden musste. Die Deckschichtdicke der siegelfähigen Schicht (A) betrug wiederum 2,5 $\mu$m und diejenige der nicht siegelfähigen Schicht (C) betrug 2,0 $\mu$m. Die Siegeleigenschaften haben sich hierdurch verbessert, insbesondere ist die Siegelnahtfestigkeit deutlich größer geworden. Zur Erzielung eines guten Handlings und eines guten Verarbeitungsverhalten der Folie wurde die Pigmentkonzentration in den beiden Deckschichten leicht angehoben.

**Vergleichsbeispiel 1**

Im Vergleich zu Beispiel 1 wurde jetzt die siegelfähige Deckschicht (A) nicht pigmentiert. Die Siegeleigenschaften haben sich zwar hierdurch etwas verbessert, jedoch ist das Handling der Folie und das Verarbeitungsverhalten inakzeptabel schlechter geworden.

**Vergleichsbeispiel 2**

Im Vergleich zu Beispiel 1 wurde jetzt die siegelfähige Deckschicht (A) so hoch pigmentiert wie die nicht siegelfähige Deckschicht (C). Das Handling und die Verarbeitungseigenschaften der Folie haben sich durch diese Maßnahme verbessert, jedoch sind die Siegeleigenschaften deutlich schlechter geworden.

**Vergleichsbeispiel 3**

Im Vergleich zu Beispiel 1 wurde jetzt die nicht siegelfähige Deckschicht (A) deutlich weniger pigmentiert. Das Handling der Folie und das Verarbeitungsverhalten der Folie ist deutlich schlechter geworden.

**Vergleichsbeispiel 4**

Es wurde Beispiel 1 aus der EP-A-0 035 835 nachgearbeitet. Das Siegelverhalten der Folie, das Handling der Folie und das Verarbeitungsverhalten der Folie ist schlechter als bei den erfindungsgemäßen Beispielen

Tabelle 2

| Beispiel | Foliendicke μm | Folienaufbau | Schichtdicken μm | | | Pigmente in den Schichten | | | mittlerer Pigment-Durchmesser in Schichten μm | | | Pigment-konzentrationen | | |
|---|---|---|---|---|---|---|---|---|---|---|---|---|---|---|
| | | | A | B | C | A | B | C | A | B | C | A | B | C |
| B 1 | 12 | ABC | 1,5 | 9 | 1,5 | Sylobloc 44 H Aerosil TT 600 | kein | Sylobloc 44 H Aerosil TT 600 | 2,5 0,04 | | 2,5 0,04 | 300 375 | 0 | 1200 1500 |
| B 2 | 12 | ABC | 2 | 8,5 | 1,5 | Sylobloc 44 H Aerosil TT 600 | kein | Sylobloc 44 H Aerosil TT 600 | 2,5 0,04 | | 2,5 0,04 | 300 375 | 0 | 1200 1500 |
| B 3 | 20 | ABC | 2,5 | 15,5 | 2 | Sylobloc 44 H Aerosil TT 600 | kein | Sylobloc 44 H Aerosil TT 600 | 2,5 0,04 | | 2,5 0,04 | 300 375 | 0 | 1200 1500 |
| B 4 | 20 | ABC | 2,5 | 15,5 | 2 | Sylobloc 44 H Aerosil TT 600 | kein | Sylobloc 44 H Aerosil TT 600 | 2,5 0,04 | | 2,5 0,04 | 400 500 | 0 | 1500 1875 |
| VB 1 | 12 | ABC | 1,5 | 9 | 1,5 | kein | kein | Sylobloc 44 H Aerosil TT 600 | | | 2,5 0,04 | | 0 | 1200 1500 |
| VB 2 | 12 | ABC | 1,5 | 9 | 1,5 | Sylobloc 44 H Aerosil TT 600 | kein | Sylobloc 44 H Aerosil TT 600 | 2,5 0,04 | | 2,5 0,04 | 300 375 | 0 | 1200 1500 |
| VB 3 | 12 | ABC | 1,5 | 9 | 1,5 | Sylobloc 44 H Aerosil TT 600 | kein | Sylobloc 44 H Aerosil TT 600 | 2,5 0,04 | | 2,5 0,04 | 300 375 | 0 | 600 750 |

(fortgesetzt)

| Beispiel | Foliendicke μm | Folienaufbau | Schichtdicken μm | | | Pigmente in den Schichten | | | mittlerer Pigment-Durchmesser in Schichten μm | | | Pigment-konzentrationen | | |
|---|---|---|---|---|---|---|---|---|---|---|---|---|---|---|
| | | | A | B | C | A | B | C | A | B | C | A | B | C |
| VB 4 | 15 | AB | 2,25 | 12,8 | | Gasil 35 | kein | | 3 | | | 2500 | 0 | |

## Tabelle 3

| Bei-spiel | Siegel-anspring-temperatur A-Seite gegen A-Seite | Siegelnaht-festigkeit A-Seite gegen A-Seite | Reibung COF C-Seite gegen C-Seite | Mittlere Rauhigkeit $R_a$ A-Seite | C-Seite | Messwerte für die Gasströmung A-Seite | C-Seite | Konstante n A/B A | C | $\Delta p$ | Glanz A-Seite | C-Seite | Trübung | Wickel-verhalten und Handling | Verarbeitungs-verhalten |
|---|---|---|---|---|---|---|---|---|---|---|---|---|---|---|---|
| B 1 | 100 | 2 | 0,45 | 25 | 65 | 1200 | 120 | 0,5 | 3,1 | 0,17 | 140 | 170 | 2,5 | ++ | ++ |
| B 2 | 98 | 2,7 | 0,45 | 26 | 65 | 1280 | 120 | 0,5 | 3,1 | 0,17 | 140 | 170 | 2,5 | ++ | ++ |
| B 3 | 95 | 3 | 0,41 | 23 | 61 | 1110 | 120 | 0,5 | 3,1 | 0,17 | 130 | 170 | 3 | ++ | ++ |
| B 4 | 85 | 3,3 | 0,4 | 23 | 65 | 1300 | 110 | 0,5 | 3,1 | 0,17 | 130 | 170 | 3 | ++ | ++ |
| VB 1 | 98 | 2,1 | 0,45 | 10 | 65 | 10000 | 80 | | | 0,17 | 160 | 170 | 1,5 | - | - |
| VB 2 | 110 | 1 | 0,45 | 65 | 65 | 80 | 80 | | | 0,17 | 130 | 170 | 2,8 | - | - |
| VB 3 | 100 | 2 | 0,45 | 25 | 37 | 1200 | 150 | | | 0,17 | 160 | 190 | 1,5 | - | - |
| VB 4 | 115 | 0,97 | >2 | 70 | 20 | 50 | >5000 | | | 0,17 | | | 12 | - | - |

Zeichenerklärung beim Wickelverhalten, Handling und beim Verarbeitungsverhalten der Folien:

++: keine Klebeneigung an Walzen oder anderen mechanischen Teilen, keine Blockprobleme beim Wickeln und bei der Verarbeitung auf Verpackungsmaschinen, niedrige Herstellkosten

+: mittlere Herstellkosten

-: Klebeneigung an Walzen oder anderen mechanischen Teilen, Blockprobleme beim Wickeln und bei der Verarbeitung auf Verpackungsmaschinen, hohe Herstellkosten durch aufwendiges Handling der Folie in den Maschinen

EP 1 138 480 B1

**Patentansprüche**

1. Koextrudierte, biaxial orientierte, siegelfähige Polyesterfolie mit mindestens einer Basisschicht (B), einer siegelfähigen Deckschicht (A) und einer weiteren Deckschicht (C), wobei die siegelfähige Deckschicht (A) eine Siegelanspringtemperatur von maximal 110 °C und eine Siegelnahtfestigkeit von mindestens 1,3 N/15 mm Folienbreite aufweist, **dadurch gekennzeichnet, dass** die siegelfähige Deckschicht (A) eine mittlere Oberflächenrauigkeit, ausgedrückt durch den $R_a$-Wert, von ≤ 40 nm und einen Messwert der Gasströmung im Bereich von 300 bis 4000 s besitzt, **dass** die nicht siegelfähige Deckschicht (C) einen Reibungskoeffizienten COF von ≤ 0,5, eine mittlere Oberflächenrauigkeit, ausgedrückt als $R_a$-Wert im Bereich von $40 \leq R_a \leq 150$ nm und einen Messwert der Gasströmung von ≤ 140 s besitzt und **dass** für die nicht siegelfähige Deckschicht (C) die Anzahl von Erhebungen $N_c$ pro mm² Folienoberfläche mit der jeweiligen Höhe h über folgende Gleichungen korreliert ist:

$$A_{C1} - B_{C1} \cdot \log h/\mu m < \log N_C/mm^2 < A_{C2} - B_{C2} \cdot \log h/\mu m$$

mit $0,01\ \mu m \leq h \leq 10\ \mu m$

und $A_{C1} = 0,29$, $B_{C1} = 3,30$
und $A_{C2} = 1,84$, $B_{C2} = 2,70$,

wobei solche Folien ausgenommen sind, die mindestens ein Flammschutzmittel oder mindestens einen UV-Absorber enthalten, und die genannten Parameter bestimmt werden wie in der Beschreibung angegeben.

2. Siegelfähige Polyesterfolie nach Anspruch 1, **dadurch gekennzeichnet, dass** die siegelfähige Deckschicht (A) einen amorphen Copolyester enthält, der aus Ethylenterephthalat- und Ethylenisophthalat-Einheiten und aus Ethylenglykol-Einheiten aufgebaut ist.

3. Siegelfähige Polyesterfolie nach Anspruch 1 oder 2, **dadurch gekennzeichnet, dass** der amorphe Copolyester der siegelfähigen Deckschicht (A) Ethylenterephthalat in einem Anteil von 40 bis 95 Mol-% und Ethylenisophthalat in einem Anteil von 60 bis 5 Mol-% enthält, bevorzugt Ethylenterephthalat in einem Anteil von 50 bis 90 Mol-% und Ethylenisophthalat in einem Anteil von 50 bis 10 Mol-%, besonders bevorzugt Ethylenterephthalat in einem Anteil von 60 bis 85 Mol-% und Ethylenisophthalat in einem Anteil von 40 bis 15 Mol-%.

4. Siegelfähige Polyesterfolie nach einem der Ansprüche 1 bis 3, **dadurch gekennzeichnet, dass** die siegelfähige Deckschicht (A) eine Dicke im Bereich von 0,2 bis 3 $\mu m$ besitzt.

5. Siegelfähige Polyesterfolie nach einem der Ansprüche 1 bis 4, **dadurch gekennzeichnet, dass** sie Antiblockmittel enthält ausgewählt aus der Gruppe enthaltend anorganische und/oder organische Partikeln wie Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze von Dicarbonsäuren, Ruß, Titandioxid, Kaolin oder vernetzte Polystyrol- oderAcrylat-Partikeln oder Mischungen von diesen.

6. Siegelfähige Polyesterfolie nach Anspruch 5, **dadurch gekennzeichnet, dass** sie als Antiblockmittel Teilchen mit einem mittleren Primärpartikeldurchmesser von kleiner als 100 nm, bevorzugt kleiner als 60 nm, besonders bevorzugt kleiner als 50 nm, gemessen nach der Sedigraphmethode, und/oder Teilchen mit einem mittleren Primärpartikeldurchmesser von größer/gleich 1 $\mu m$, bevorzugt größer/gleich 1,5 $\mu m$ und besonders bevorzugt größer/gleich 2 $\mu m$ enthält.

7. Siegelfähige Polyesterfolie nach einem der Ansprüche 1 bis 6, **dadurch gekennzeichnet, dass** die Menge an Partikeln in der Basisschicht (B) im Bereich zwischen 0 und 0,15 Gew.-% liegt, vorzugsweise zwischen 0 und 0,12 Gew.-%, insbesondere zwischen 0 und 0,10 Gew.-%, **dass** die Menge an Partikeln in der nicht siegelfähigen Deckschicht (C) im Bereich zwischen 0,1 und 1,0 Gew.-%, vorteilhaft zwischen 0,12 und 0,8 Gew.-%, insbesondere zwischen 0,15 und 0,6 Gew.-%, liegt und **dass** die siegelfähige Deckschicht (A) eine Menge an Partikeln im Bereich zwischen 0,01 und 0,2 Gew.-%, vorzugsweise zwischen 0,015 und 0,15 Gew.-%, insbesondere zwischen 0,02 und 0,1 Gew.-%, enthält, wobei alle Angaben in Gew.-% bezogen sind auf das Gesamtgewicht der jeweiligen Schicht.

8. Siegelfähige Polyesterfolie nach einem der Ansprüche 1 bis7, **dadurch gekennzeichnet, dass** die Dicken der Deckschichten (A) und (C) größer als 0,1 $\mu$m sind und vorzugsweise im Bereich von 0,2 bis 4,0 $\mu$m, besonders bevorzugt im Bereich von 0,2 bis 3,5 $\mu$m, insbesondere im Bereich von 0,3 bis 3 $\mu$m und ganz besonders bevorzugt im Bereich von 0,3 bis 2,5 $\mu$m, liegen, wobei die Deckschichten (A) und (C) gleich oder verschieden dick sein können.

9. Siegelbare Polyesterfolie nach einem der Ansprüche 1 bis 8, **dadurch gekennzeichnet, dass** die Gesamtdicke der Polyesterfolie im Bereich von 3 bis 80 $\mu$m, insbesondere von 4 bis 50 $\mu$m, vorzugsweise von 5 bis 30 $\mu$m, liegt, wobei die Basisschicht (B) einen Anteil von vorzugsweise 5 bis 90 % an der Gesamtdicke hat.

10. Verfahren zum Herstellen einer siegelfähigen Polyesterfolie nach einem der Ansprüche 1 bis 9, bei dem die Polymeren für die Basisschicht (B) und die beiden Deckschichten (A) und (C) getrennten Extrudern zugeführt werden, etwa vorhandene Fremdkörper oder Verunreinigungen aus der Polymerschmelze vor der Extrusion durch geeignete Filter entfernt werden, die Schmelzen dann in einer Mehrschichtdüse zu flachen Schmelzefilmen ausgeformt und übereinander geschichtet werden, anschließend der Mehrschichtfilm mit Hilfe einer Kühlwalze und gegebenenfalls weiterer Walzen abgezogen, verfestigt und danach biaxial streckorientiert und hitzefixiert, gegebenenfalls danach wenigstens an einer Oberflächenschicht noch corona- oder flammbehandelt wird, **dadurch gekennzeichnet, dass** die biaxiale Streckung aufeinanderfolgend durchgeführt wird, wobei zuerst längs (in Maschinenrichtung) und dann quer (senkrecht zur Maschinenrichtung) gestreckt wird, **dass** die Längsstreckung bei einer Temperatur im Bereich von 80 bis 130 °C und die Querstreckung im Bereich von 90 bis 150 °C durchgeführt wird und **dass** das Längsstreckverhältnis im Bereich von 2,5:1 bis 6:1, bevorzugt von 3:1 bis 5,5:1, und das Querstreckverhältnis im Bereich von 3,0:1 bis 5,0:1, bevorzugt von 3,5:1 bis 4,5:1, eingestellt wird.

11. Verfahren nach Anspruch 10, **dadurch gekennzeichnet, dass** nach der Längsstreckung und vor der Querstreckung eine oder beide Oberfläche(n) der Folie nach dem In-line-Verfahren beschichtet wird/werden.

12. Verwendung einer siegelfähigen Polyesterfolie nach einem der Ansprüche 1 bis 9 auf schnelllaufenden Verpackungsmaschinen.

**Claims**

1. A coextruded, biaxially oriented, sealable polyester film with at least a base layer (B), with a sealable outer layer (A) and with another outer layer (C), where the sealable outer layer (A) has a minimum sealing temperature of not more than 110°C and a seal seam strength of at least 1.3 N/15 mm of film width, wherein the sealable outer layer (A) has an average surface roughness, expressed through the Ra, of $\leq$ 40 nm, and has a value measured for gas flow within the range from 300 to 4000 s, wherein the nonsealable outer layer (C) has a coefficient of friction COF of $\leq$ 0.5, an average surface roughness, expressed as Ra, within the range of $40 \leq Ra \leq 150$ nm, and a value measured for gas flow of $\leq$ 140 s, and wherein, for the nonsealable outer layer (C), the number of elevations NC per mm2 of film surface is correlated with their respective heights h via the following equations:

$$AC1 - BC1 \cdot \log h/\mu m < \log NC/mm2 < AC2 - BC2 \cdot \log h/\mu m$$

where $0.01\ \mu m \leq h \leq 10\ \mu m$

and AC1 = 0.29, DC1 = 3.30
and AC2 = 1.84, ABC2 = 2.70,

but excluding films which comprise at least one flame retardant of which comprise at least one UV absorber, where the parameters mentioned are determined as stated in the description.

2. The sealable polyester film as claimed in claim 1, wherein the sealable outer layer (A) comprises an amorphous copolyester composed of ethylene terephthalate units and of ethylene isophthalate units and of ethylene glycol units.

3. The sealable polyester film as claimed in claim 1 or 2, wherein the amorphous copolyester of the sealable outer layer (A) comprises from 40 to 95 mol% of ethylene terephthalate and from 60 to 5 mol% of ethylene isophthalate, preferably from 50 to 90 mol% of ethylene terephthalate and from 50 to 10 mol% of ethylene isophthalate, particularly preferably from 60 to 85 mol% of ethylene terephthalate and from 40 to 15 mol% of ethylene isophthalate.

4. The sealable polyester film as claimed in any of claims 1 to 3, wherein the sealable outer layer (A) has a thickness in the range from 0.2 to 3 $\mu$m.

5. The sealable polyester film as claimed in any of claims 1 to 4, which comprises antiblocking agents selected from the group consisting of inorganic and organic particles, such as calcium carbonate, amorphous silica, talc, magnesium carbonate, barium carbonate, calcium sulfate, barium sulfate, lithium phosphate, calcium phosphate, magnesium phosphate, aluminum oxide, LiF, the calcium, barium, zinc and manganese salts of dicarboxylic acids, carbon black, titanium dioxide, kaolin and crosslinked polystyrene particles and crosslinked acrylate particles, or mixtures of these.

6. The sealable polyester film as claimed in claim 5, which comprises, as antiblocking agent, particles with an average primary particle diameter below 100 nm, preferably below 60 nm, particularly preferably below 50 nm, measured by the sedigraph method, and/or particles with an average primary particle diameter greater than or equal to 1 $\mu$m, preferably greater than or equal to 1.5 $\mu$m and particularly preferably greater than or equal to 2 $\mu$m.

7. The sealable polyester film as claimed, in any of claims 1 to 6, wherein the amount of particles in the base layer (B) is within the range from 0 to 0.15% by weight, preferably from 0 to 0.12% by weight, in particular from 0 to 0.10% by weight, wherein the amount of particles in the nonsealable outer layer (C) is within the range from 0.1 to 1.0% by weight, advantageously from 0.12 to 0.8% by weight, in particular from 0.15 to 0.6% by weight, and wherein the sealable outer layer (A) comprises an amount of particles within the range from 0.01 to 0.2% by weight, preferably from 0.015 to 0.15% by weight, in particular from 0.02 to 0.1% by weight, all data being based on % by weight and on the total weight of the respective layer.

8. The sealable polyester film as claimed in any of claims 1 to 7, wherein the thicknesses of the outer layers (A) and (C) are above 0.1 $\mu$m and preferably within the range from 0.2 to 4.0 $\mu$m, particularly preferably within the range from 0.2 to 3.5 $\mu$m, in particular within the range from 0.3 to 3 $\mu$m and very particularly preferably within the range from 0.3 to 2.5 $\mu$m, the thicknesses of the outer layers (A) and (C) being identical or different.

9. The sealable polyester film as claimed in any of claims 1 to 8, wherein the total thickness of the polyester film is within the range from 3 to 80 $\mu$m, in particular from 4 to 50 $\mu$m, preferably from 5 to 30 $\mu$m, the base layer (B) preferably making up a proportion of from 5 to 90% of the total thickness.

10. A process for producing a sealable polyester film as claimed in any of claims 1 to 9, in which the polymers for the base layer (B) and the two outer layers (A) and (C) are fed to separate extruders, any foreign bodies or contamination present are removed from the polymer melt by suitable filters prior to extrusion, the melts are then extruded through a coextrusion die to give flat melt films and are laminated, and then the film having two or more layers is drawn off with the aid of a chill roll and, where appropriate, other rolls, and solidified, and then biaxially stretch-oriented and heat-set, and then, where appropriate, corona-or flame-treated on at least one surface, which comprises carrying out the biaxial stretching in succession, first stretching longitudinally (in the machine direction) and then transversely (perpendicularly to the machine direction), carrying out the longitudinal stretching at a temperature within the range from 80 to 130°C, and the transverse stretching within the range from 90 to 150°C, and setting the longitudinal stretching ratio within the range from 2.5:1 to 6:1, preferably from 3:1 to 5.5:1, and the transverse stretching ratio within the range from 3.0:1 to 5.0:1, preferably from 3.5:1 to 4.5:1.

11. The process as claimed in claim 10, wherein one or both surfaces of the film is/are in-line coated after the longitudinal stretching and prior to the transverse stretching.

12. The use of the sealable polyester film as claimed in any of claims 1 to 9 on high-speed packaging machinery.

**Revendications**

1. Feuille de polyester coextrudée, orientée biaxialement et scellable, comprenant au moins une couche de base (B), une couche de couverture scellable (A) et une autre couche de couverture (C), dans laquelle la couche de couverture scellable (A) présente une température d'activation du scellage de 110 °C au maximum et une résistance du joint de scellage d'au moins 1,3 N/15 mm de largeur de feuille, **caractérisée en ce que** la couche de couverture scellable (A) possède une rugosité moyenne de surface, exprimée par la valeur $R_a$, ≤40 nm et une valeur de mesure de l'écoulement gazeux dans la plage de 300 à 4000 s, **en ce que** la couche de couverture non scellable (C) possède un coefficient de frottement COF ≤ 0,5, une rugosité moyenne de surface, exprimée par la valeur $R_a$ dans la plage de 40 ≤$R_a$≤150 nm et une valeur de mesure de l'écoulement gazeux≤140 s et **en ce que**, pour la couche de couverture non scellable (C), le nombre d'élévations $N_C$ par mm$^2$ de surface de feuille est en corrélation avec la hauteur respective h selon les équations suivantes :

$$A_{C1}\text{-}B_{C1} \cdot \log h/\mu m < \log N_C/mm^2 < A_{C2}\text{-}B_{C2} \cdot \log h/\mu m$$

avec 0,01 $\mu$m ≤ h ≤ 10 $\mu$m
et $A_{C1}$ = 0,29, $B_{C1}$ = 3,30
et $A_{C2}$= 1,84, BC2= 2,70,
à l'exclusion des feuilles contenant au moins un agent ignifuge ou au moins un absorbeur d'UV, et
et les paramètres cités sont déterminés de la manière indiquée dans la description.

2. Feuille de polyester scellable selon la revendication 1, **caractérisée en ce que** la couche de couverture scellable (A) contient un copolyester amorphe qui est constitué d'unités de téréphtalate d'éthylène, d'unités d'isophtalate d'éthylène et d'unités d'éthylèneglycol.

3. Feuille de polyester scellable selon la revendication 1 ou 2, **caractérisée en ce que** le copolyester amorphe de la couche de couverture scellable (A) contient du téréphtalate d'éthylène en fraction de 40 à 95 % en mole et de l'isophtalate d'éthylène en fraction de 60 à 5 % en mole, de préférence du téréphtalate d'éthylène en fraction de 50 à 90 % en mole et de l'isophtalate d'éthylène en fraction de 50 à 10 % en mole, mieux encore du téréphtalate d'éthylène en fraction de 60 à 85 % en mole et de l'isophtalate d'éthylène en fraction de 40 à 15 % en mole.

4. Feuille de polyester scellable selon l'une quelconque des revendications 1 à 3, **caractérisée en ce que** la couche de couverture scellable (A) a une épaisseur dans la plage de 0,2 à 3 $\mu$m.

5. Feuille de polyester scellable selon l'une quelconque des revendications 1 à 4, **caractérisée en ce qu'**elle contient des agents antibloquants choisis dans le groupe contenant des particules inorganiques et/ou organiques, telles que du carbonate de calcium, de l'acide silicique amorphe, du talc, du carbonate de magnésium, du carbonate de barium, du sulfate de calcium, du sulfate de barium, du phosphate de lithium, du phosphate de calcium, du phosphate de magnésium, de l'oxyde d'aluminium, du LiF, des sels de calcium, de baryum, de zinc ou de manganèse d'acides dicarboxyliques, de la suie, du dioxyde de titane, du kaolin ou des particules réticulées de polystyrène ou d'acrylate ou leurs mélanges.

6. Feuille de polyester scellable selon la revendication 5, **caractérisée en ce qu'**elle contient comme agents antibloquants des particules ayant un diamètre particulaire primaire moyen inférieur à 100 nm, de préférence inférieur à 60 nm, mieux encore inférieur à 50 nm, mesuré par le procédé de sédigraphie, et/ou des particules ayant un diamètre particulaire primaire moyen supérieur ou égal à 1 $\mu$m, de préférence supérieur ou égal à 1,5 $\mu$m, mieux encore supérieur ou égal à 2 $\mu$m.

7. Feuille de polyester scellable selon l'une quelconque des revendications 1 à 6, **caractérisée en ce que** la quantité de particules dans la couche de base (B) se situe dans la plage entre 0 et 0,15 % en poids, de préférence entre 0 et 0, 12 % en poids, en particulier entre 0 et 0, 10 % en poids, **en ce que** la quantité de particules dans la couche de couverture non scellable (C) se situe dans la plage entre 0,1 et 1,0 % en poids, avantageusement entre 0,12 et 0,8 % en poids, en particulier entre 0,15 et 0,6 % en poids et **en ce que** la couche scellable (A) contient une quantité de particules dans la plage entre 0,01 et 0,2 % en poids, de préférence entre 0,015 et 0,15 % en poids, en particulier entre 0,02 et 0,1 % en poids, toutes les indications en % en poids se rapportant au poids total de la couche respective.

8. Feuille de polyester scellable selon l'une quelconque des revendications 1 à 7, **caractérisée en ce que** les épaisseurs des couches de couverture (A) et (C) sont supérieures à 0,1 $\mu$m et se situent de préférence dans la plage de 0,2 à 4,0 $\mu$m, mieux encore dans la plage de 0,2 à 3,5 $\mu$m, bien mieux encore dans la plage de 0,3 à 3 $\mu$m et tout particulièrement dans la plage de 0,3 à 2,5 $\mu$m, les couches de couverture (A) et (C) pouvant avoir une épaisseur identique ou différente.

9.  Feuille de polyester scellable selon l'une quelconque des revendications 1 à 8, **caractérisée en ce que** l'épaisseur totale de la feuille de polyester se situe dans la plage de 3 à 80 μm, en particulier de 4 à 50 μm, de préférence de 5 à 30 μm, la couche de base (B) représentant de préférence une fraction de 5 à 90 % de l'épaisseur totale.

10. Procédé de fabrication d'une feuille de polyester scellable selon l'une quelconque des revendications 1 à 9, dans lequel les polymères pour la couche de base (B) et les deux couches de couverture (A) et (C) sont acheminés à des extrudeuses séparées, les corps étrangers ou les impuretés éventuellement présents sont éliminés de la masse fondue de polymère par des filtres avant l'extrusion, les masses fondues sont ensuite moulées dans une buse pour couches multiples sous forme de films plats de masse fondue et stratifiées l'une sur l'autre, puis le film multicouche est tiré à l'aide d'un cylindre de refroidissement et éventuellement d'autres cylindres, solidifié et ensuite orienté biaxialement par étirage et thermofixé, et il est ensuite éventuellement soumis à un traitement corona ou un traitement à la flamme au moins sur une couche superficielle, **caractérisé en ce que** l'étirage biaxial s'effectue successivement, l'étirage se faisant d'abord longitudinalement (dans le sens machine) et ensuite transversalement (perpendiculairement au sens machine), **en ce que** l'étirage longitudinal a lieu à une température dans la plage de 80 à 130 °C et l'étirage transversal dans la plage de 90 à 150 °C et **en ce que** le rapport d'étirage longitudinal se situe dans la plage de 2,5:1 à 6:1, de préférence de 3:1 à 5,5:1, et le rapport d'étirage transversal dans la plage de 3,0:1 à 5,0:1, de préférence de 3,5:1 à 4,5:1.

11. Procédé selon la revendication 10, **caractérisé en ce qu'**après l'étirage longitudinal et avant l'étirage transversal, on revêt une surface ou les deux surfaces de la feuille selon le procédé de type en ligne.

12. Utilisation d'une feuille de polyester scellable selon l'une quelconque des revendications 1 à 9 sur des machines d'emballage à grande vitesse.

**IN DER BESCHREIBUNG AUFGEFÜHRTE DOKUMENTE**

**In der Beschreibung aufgeführte Patentdokumente**

- GB 1465973 A
- EP 0035835 A
- EP 0432886 A
- EP 0515096 A
- WO 9806575 A